# EUROPEAN PATENT SPECIFICATION

(11) **EP 1 107 886 B1**
(45) Date of publication and mention of the grant of the patent: **25.04.2007**
(21) Application number: 99951387.2
(22) Date of filing: 23.08.1999
(51) Int. Cl.: B60R 21/16, B60R 21/26

(54) **SENSOR PAD FOR CONTROLLING AIRBAG DEPLOYMENT AND ASSOCIATED SUPPORT**
SENSORKISSEN ZUR STEUERUNG DES AIRBAGS MIT ZUGEHÖRIGER HALTEVORRICHTUNG
CAPTEUR SOUS FORME DE COUSSINET SERVANT A COMMANDER LE DEPLOIEMENT D'UN AIRBAG ET SUPPORT ASSOCIE

(30) Priority: 03.09.1998 US 146677; 04.08.1999 US 368113
(43) Date of publication of application: 20.06.2001
(73) Proprietor: METHODE ELECTRONICS, Inc., Chicago, Illinois 60706 (US)
(72) Inventor: BAKER, Robert, Scott, Dandridge, TN 37725 (US); SPECKHART, Frank, H., Knoxville, TN 37919 (US)
(74) Representative: Grünecker, Kinkeldey, Stockmair & Schwanhäusser Anwaltssozietät
(86) International application number: PCT/US1999/019286
(87) International publication number: WO 2000/013945

(56) References cited:
- WO-A-98/26961
- DE-A1- 19 802 099
- US-A- 2 842 957
- US-A- 4 644 597
- US-A- 4 957 286
- US-A- 5 117 373
- US-A- 5 427 331

## Description

### Technical Field

This invention relates to the field of weight sensing pads. More particularly, it relates to a sensor pad, and associated sensor pad support, for detecting both the presence and weight of a passenger for controlling deployment of an automobile airbag. Comparable subject matter is known of US 5,975,568 and US D 409 935.

### Background Art

A seat weight sensor having a fluid filled bladder is known of in WO 98/26961 disclosing the features of the preamble of claim 1. A pressure sensitive switch installed in a vehicle seat is known of in DE 198 02 099 A1.

In recent years, airbags or self-inflating restraints, have proven to be effective in preventing injury resulting from head-on and near head-on collisions, when used correctly in conjunction with the shoulder-lap restraints. However, a small number of highly publicized incidents have highlighted a serious risk of potentially catastrophic injury to small adults, children or infants in rear-facing child-safety seats. While it is certainly advisable to place small children or infants in rear-facing child-safety seats in a rear seat, in certain types of vehicles, namely pick-up trucks, this is simply not an option. As a result, a demand has arisen for selective deployment of the automobile's self-inflating restraint. In response, certain automobile manufacturers now provide a key-switch to allow the owner/operator to choose whether or not the self-inflating restraint should be "armed" that is to say, whether the self-inflating restraint should be active and deployable in the event of a collision. However, these types of manual controls, or overrides, also carry an inherent risk. Namely the inadvertent failure to re-arm the restraint for an adult passenger, or the failure to deactivate the restraint in the event that the passenger seat is occupied by a child or safety seat. Further, the state of the art airbag deployment system does not detect whether the passenger seat is unoccupied and in the event of a collision fires the airbag, needlessly resulting in the unnecessary expense of replacing the dash and airbag mechanism.

What is missing in the art is a sensor pad that would detect the presence or absence of a person sitting in the seat and that could distinguish between an average size adult and a diminutive adult or child safety seat so as to control the deployment of an automobile self-inflating restraint, such as an airbag.

Accordingly, it is an object of the present invention to provide a sensor pad for controlling the deployment of a self-inflating restraint.

Another object of the present invention is to provide a sensor pad that is weight sensitive and that detects the presence of a person sitting in seat associated with the sensor pad and that upon detection of a person occupying the seat directs the airbag to deploy in the event of a collision.

Yet another object of the present invention is to provide a sensor pad for controlling the deployment of an automobile airbag without significantly increasing the vehicle weight or cost of manufacture.

Other objects and advantages over the prior art will become apparent to those skilled in the art upon reading the detailed description together with the drawings as described as follows.

### Disclosure of the Invention

In accordance with the various features of this invention, a sensor pad for controlling the deployment of an automobile airbag is provided. In the preferred embodiment, the weight sensing pad is used in the seat of an automobile to sense the detect the presence of the seat's occupant. The volumetric displacement of the fluid within the weight sensing pad produces a pressure change and is measured with an electronic pressure transducer and is used to determine if an airbag should be deployed upon impact in a collision. In this regard, the transducer is in electronic communication with the vehicle's airbag control module. The weight sensing pad is defined by a thin, fluid-filled bladder. The bladder is preferably constructed of two identical sheets of urethane. The urethane sheets are spot welded together at a plurality of points or areas in order to form cells, in a selected geometric configuration, in fluid communication with one another. The size, geometric configuration and cross-sectional area of the spots are selected so as to maximize performance while minimizing weight. In this regard, in order to minimize the weight of the bladder, internal volume must be small in relation to the external surface area of the weight sensing pad. The bladder in the preferred embodiment is filled with a non-compressible fluid having a very low freezing point, such that there are a minimum of air, or gas, pockets within the bladder. A silicone, such as a silica gel, of medium viscosity is a suitable fluid.

Volumetric displacement, under pressure, of the fluid within the bladder is dependent on a number of factors such as bladder stiffness, i.e. the ability of the urethane material to resist stretching, the zero pressure volume of the bladder, the seated area of the passenger or child safety seat, and the weight of the seated passenger or car safety seat. Bladder stiffness can be measured in units of 0,45 kg (2,54 cm)⁵ (lb/in⁵) and can be defined to be the slope of the curve of volume change vs. pressure increase. In other words bladder stiffness = pressure change/volume change = 0,45 kg (2,54 cm)² / (2,54 cm)³ (lb/in²/in³). Bladder stiffness is a function of the physical size and shape of the individual cells as well as the thickness of the bladder material. The preferred bladder will have a high bladder stiffness. The slope of the curve is not expected to be constant. As the bladder volume increases, the slope of the curve is expected to increase.

Zero pressure volume is defined as the volume of fluid that will first cause the pressure in the bladder to increase. In order to have minimum bladder weight, the zero pressure volume should be as small as possible. Thus, the preferred bladder has a relatively small zero pressure volume and a high degree of bladder stiffness. A bladder having a large number of relatively small internal cells in fluid communication with one another and a thin-wall bladder material meets these two criteria.

In one embodiment, the bladder is configured to be placed within the seat portion of a state of the art automobile seat. While, the bladder can be supported by a seat cushion, the bladder is preferably secured to a support member that is suspended on the seat frame. The bladder includes a pressure tube connected to a pressure activated electronic transducer that is in electronic communication with the air bag control module. As will be described in more detail below, the preferred transducer is digital and sends an arming signal to the airbag control module upon detection of a preselected pressure. The bladder further includes a plurality of securement regions for securing the bladder to the seat cushion or the support member. The bladder is formed by two urethane panels that are perimetrically sealed to each other. In the preferred embodiment, the two panels are additionally secured to one another by a plurality of relatively small, preferably circular spot welds configured to form, preferably, hexagonal-like cells that are in fluid communication with each other. Alternatively, the spot welds can be configured to form substantially triangle-like cells, that are in fluid communication with each other or can be placed randomly. In an alternate embodiment, relatively large approximately octagonal spot welds are used to form small fluid cell areas, (about thirty-three percent cell area to about sixty-seven percent weld area), thus reducing the overall weight of the liquid in the bladder.

In use, an electronic transducer is selected to generate a signal upon detection of pressure resultant from the volumetric displacement of fluid inside the bladder expected from the average size adult of approximately one hundred pounds or heavier. In an alternate embodiment, an analog transducer could be utilized to generate a signal as a function of the passenger's weight. With this information the control module would fire the airbag in accordance with a preselected set of conditions. Further information regarding passenger weight could be used to determine the force at which a variable force airbag would deploy as airbag technology advances.

### Brief Description of the Drawings

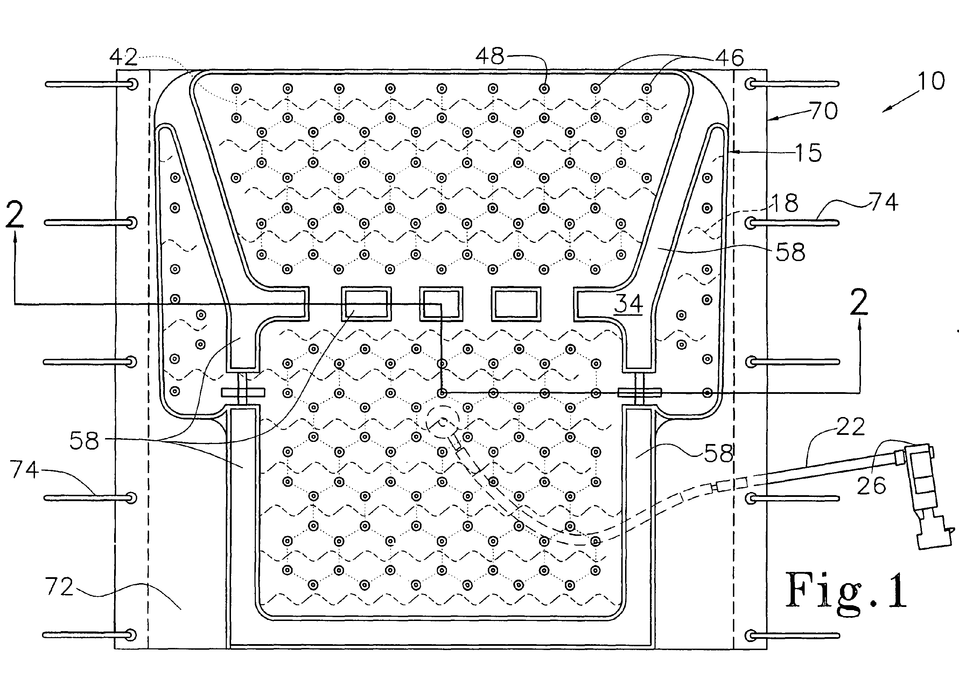

Fig. 1 illustrates a plan view of the weight sensing pad and support member of the present invention.

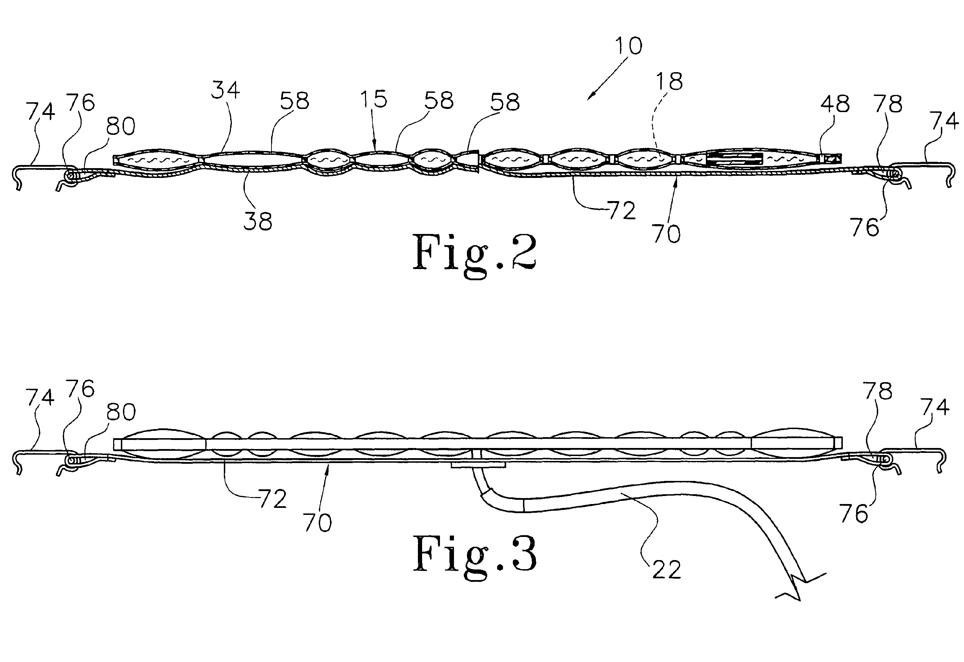

Fig. 2 illustrates a cross sectional view of the weight sensing pad and support member of the present invention taken along line 2 - 2 in Fig. 1.
Fig. 3 illustrates and end view of the embodiment illustrated in Fig. 1.
Fig. 4 illustrates a perspective view showing the weight sensing pad positioned above the cushioning in an exemplary automotive seat.
Fig. 5 illustrates a perspective view showing the weight sensing pad positioned below the cushioning in an exemplary automotive seat.

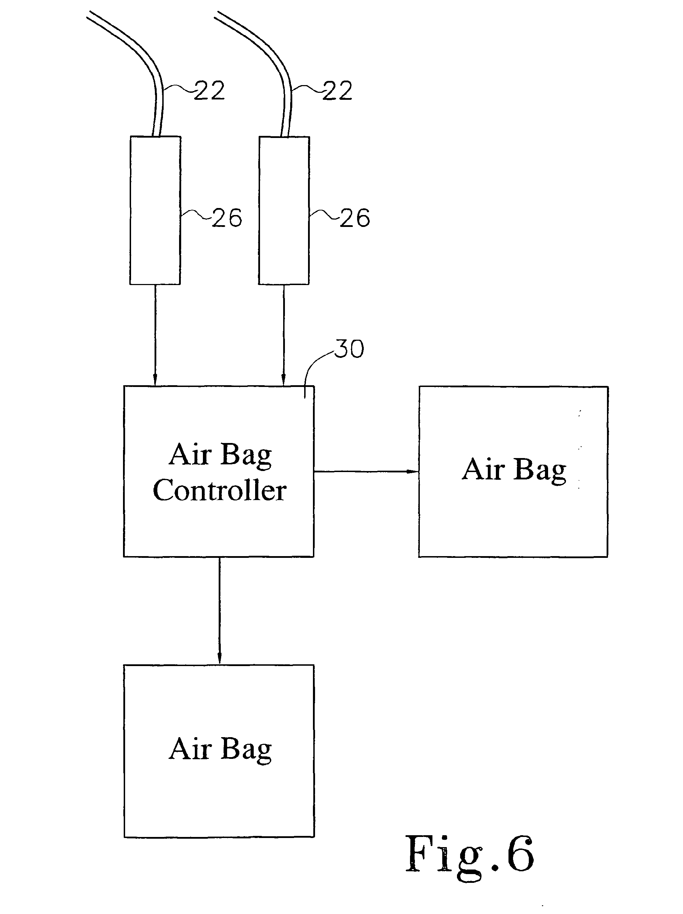

Fig. 6 illustrates a schematic view of the control of air bag deployment by the present weight sensing pad.
Fig. 7 illustrates an alternate embodiment weight sensing pad.
Fig. 8 illustrates a further alternate embodiment weight sensing pad.
Fig. 9 illustrates still another alternate embodiment weight sensing pad.

### Best Mode for Carrying Out the Invention

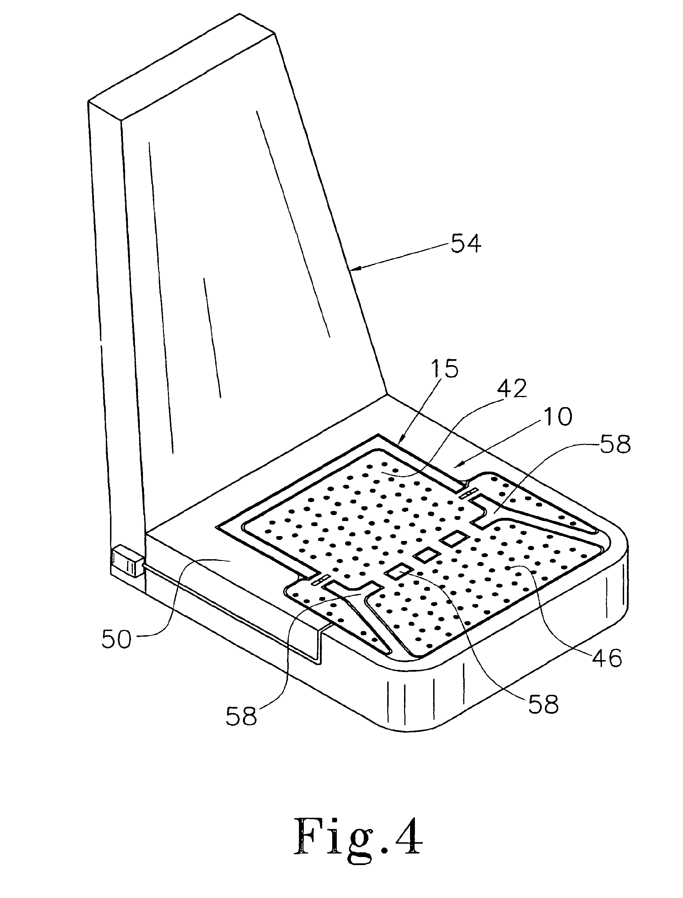

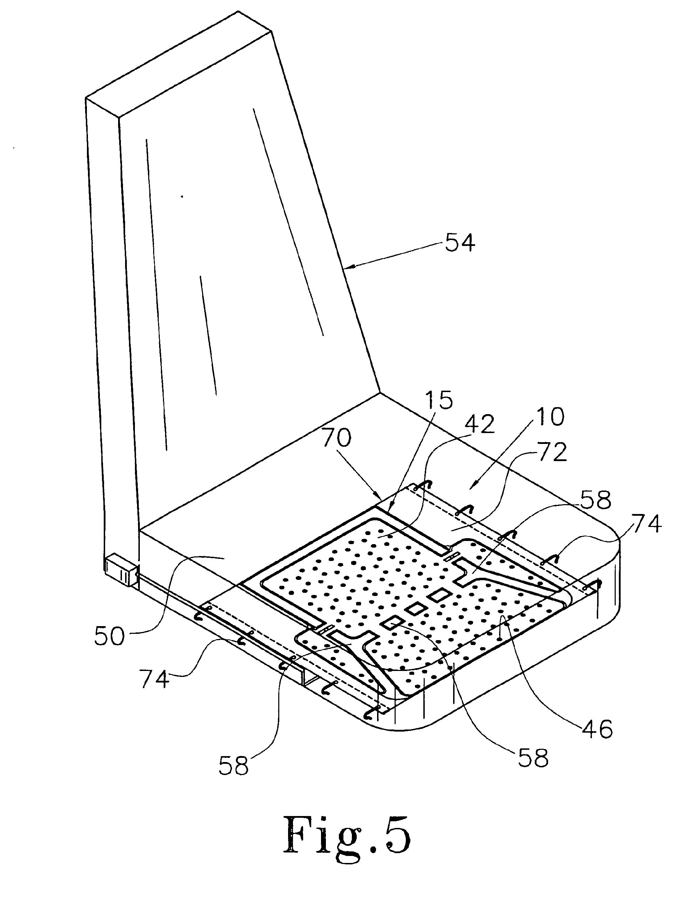

A sensor pad for controlling the deployment of an automobile airbag, constructed in accordance with the present invention, is illustrated generally as **10** in the figures. As seen in Fig. 4 and 5, in the preferred embodiment, weight sensing pad **10** is used in the seat **54** of an automobile, (not illustrated), to detect the presence of an occupant on the seat. Weight sensing pad **10** is used in conjunction with the vehicle's airbag control module in order to allow deployment of the airbag, in the event of a collision, only if the seat is occupied by a person of above a preselected weight. Weight sensing pad **10** is defined by a bladder member **15** having an interior volume subdivided into a plurality of individual cells **42** in fluid communication with each other and that is filled with a non-compressible fluid **18,** such as silicone or a silica gel of medium viscosity. In the preferred embodiment, fluid **18** should have a very low freezing point, preferably below the temperature of reasonably anticipated atmospheric conditions to which the typical automobile is exposed. A pressure tube **22** is in fluid communication with bladder **15** and is in further fluid communication with a pressure activated electronic transducer **26** which in turn is in electronic communication with the airbag controller **30.** When a person sits upon a seat **54** in which a weight sensing pad **10** is mounted, there is a volumetric displacement of fluid **18** inside the bladder **15** causing the bladder **15** to change shape and consequently causes the pressure to increase which is measured by transducer **26.** If there is a sufficient volumetric displacement of fluid to cause sufficient pressure change to activate transducer **26,** transducer **26** sends a signal to air bag controller **30.** In other words, if a passenger that weighs in excess of a preselected weight is seated on a seat **54** in which a weight sensing pad **10** is mounted, a sufficient volumetric displacement will occur to activate transducer **26.**

In the preferred embodiment, bladder **15** is constructed of two preferably substantially identical sheets of urethane **34** and **38.** Volumetric displacement, under pressure, of fluid **18** within bladder **15** is dependent on a number of factors such as bladder stiffness, i.e. the ability of the urethane material to resist stretching, the zero pressure volume of bladder **15,** the seated area of the passenger and the weight of the seated passenger. Bladder stiffness can be measured in units of 0,45 kg (2,54 cm)⁵ (lb/in⁵) and can be defined to the slope of the curve of volume change vs. pressure increase. In other words, bladder stiffness = pressure change/volume change = 0,45 kg (2,54 cm)² / (2,54 cm)³ (Ib/in²/in³). Bladder stiffness is a function of the physical size and shape of the individual cells **42** as well as the thickness of urethane sheets **34** and **38.** In general, the bladder stiffness increases when the bladder pressure increases. The preferred bladder **15** will have a high bladder stiffness. The slope of the curve is not expected to be constant. As the bladder volume increases, the slope of the curve is expected to increase.

Zero pressure volume is defined as the volume of fluid **18** that will first cause the pressure in bladder **15** to increase. In order to have minimum bladder weight, the zero pressure volume should be as small as possible. Thus, the preferred bladder **15** has a relatively small zero pressure volume and a high degree of bladder stiffness. A bladder **15** having a large number of relatively small internal cells **42** in fluid communication with one another and thin-wall urethane sheets **34** and **38** meets these two criteria. The urethane sheets **34** and **38** are spot welded together by a plurality of spot welds **46** in order to form cells **42,** which are defined by the regions between spot welds **46,** in, preferably, a selected geometric configuration, in fluid communication with one another. In the preferred embodiment, a bore hole **48** is provided through each spot weld **46** in order to provide ventilation between the passenger and the seat. The size, geometric configuration and cross-sectional area of cells **42** are selected so as to maximize performance while minimizing weight. In this regard, in order to minimize the weight of the bladder **15,** internal volume must be small in relation to the external surface area of the weight sensing pad **10.**

The bladder further includes a plurality of securement regions **58** for securing bladder **15** in the seat area **50** either to the seat cushion directly or preferably to support member **70.** In this regard, in the preferred embodiment, securement regions **58** are defined by fluid-void regions not in fluid communication with the fluid filled interior volume of bladder **15.** Support member **70** is defined by a planar piece of fabric **72** and includes at least one hook member **74** which engages the seat frame (not shown). In this regard, in the preferred embodiment, at least one rigid rod member **76** is disposed in each of two loops **78** and **80** which are in spaced relation from each other. Hooks **74** are carried by rigid rod member **76.** A seat cushion overlies sensor pad **10** and is also supported by support member **70.**

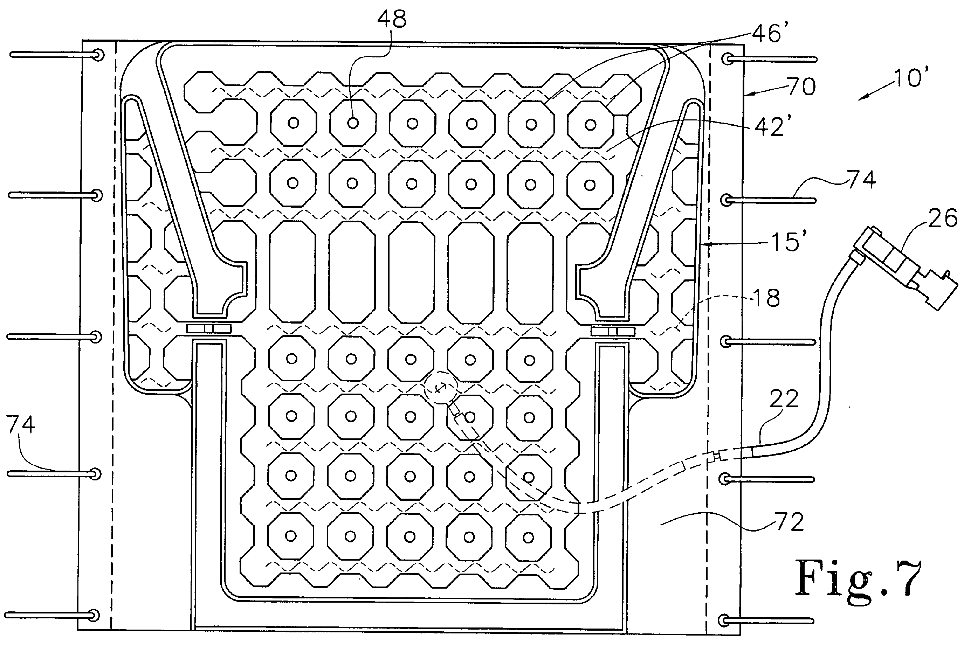

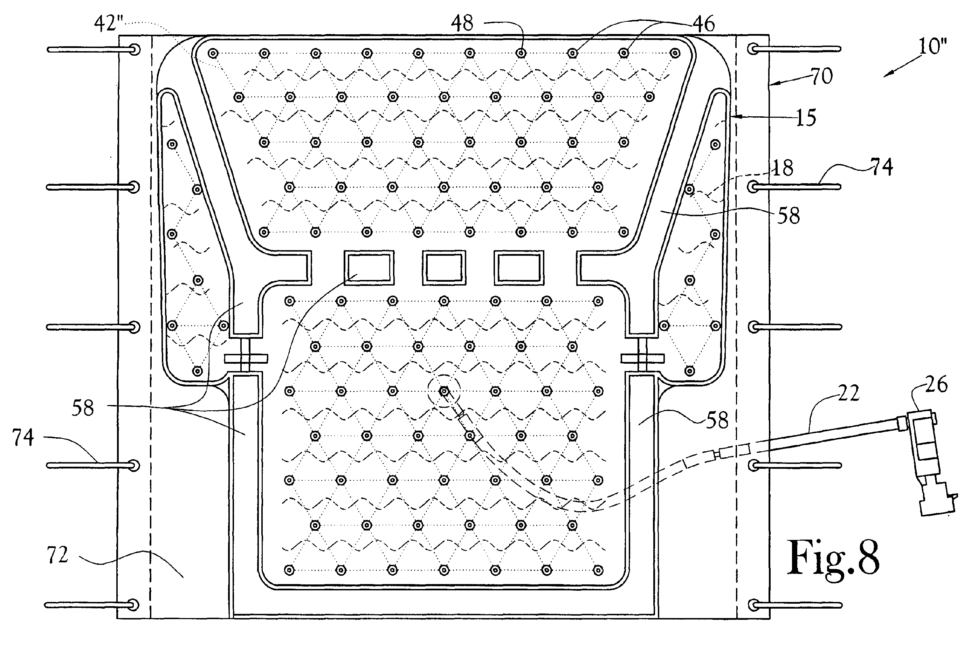

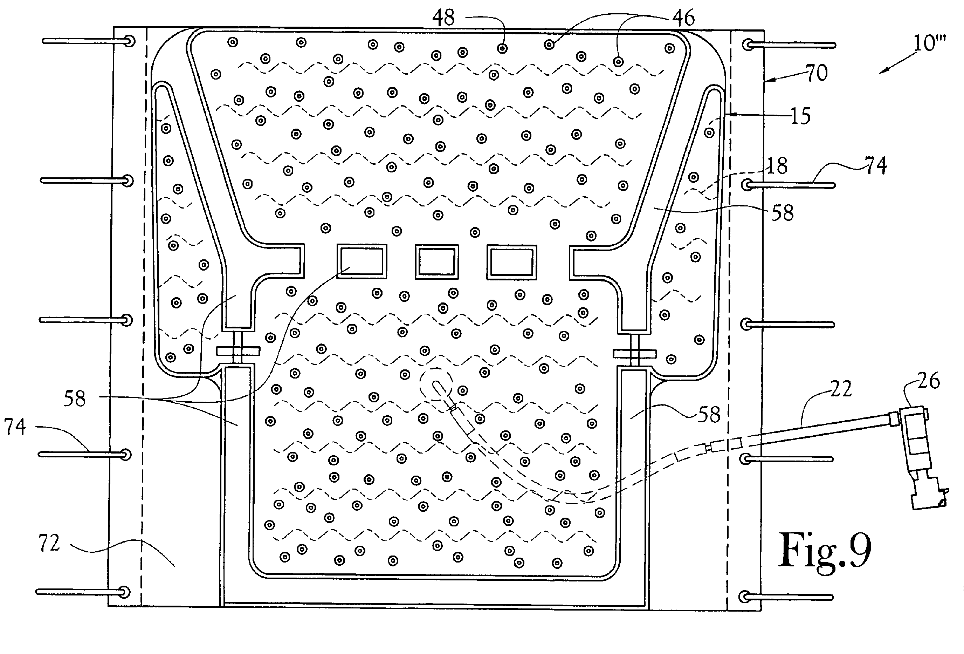

In the preferred embodiment, spot welds **46** are relatively small, circular and are selectively positioned so as to form substantially hexagonal cells **42** that are in fluid communication with each other. While hexagonal cells are preferred, other geometrically shaped cells could be utilized. For example, Figure 8 illustrates cells **42"** that are substantially triangular. And, while not as efficient, as the previously described geometrically shaped cells, the spot welds **46** could be randomly placed as illustrated in Figure 9. In an alternate embodiment, illustrated in Fig. 7, relatively large octagonal spot welds **46'** are used to form small fluid cell areas **42',** (about thirty-three percent cell area to about sixty-seven percent weld area), thus reducing the overall weight of the bladder **15'.** As above, a bore hole **48** is provided through each spot weld **46'** in order to provide ventilation between the passenger and the seat.

In use, electronic transducer **26** is selected to generate a signal upon detection of pressure resultant from the volumetric displacement of fluid **18** from bladder **15** expected from the average size adult of approximately one hundred pounds or heavier. Thus, for a small adult or child less than one hundred pounds, or if a child seat is positioned on the seat, there will be insufficient volumetric displacement to cause a pressure change to activate transducer **26** and the airbag controller will not arm the airbag to deploy in the event of a collision. In an alternate embodiment, an analog transducer could be utilized to generate a signal proportional to the passenger's weight. With this information the control module would fire the airbag in accordance with a preselected set of conditions. Further information regarding passenger weight could be used to determine the force at which a variable force airbag would deploy as airbag technology advances.

From the foregoing description, it will be recognized by those skilled in the art that a weight sensing pad for controlling deployment of an automobile airbag offering advantages over the prior art has been provided. Specifically, the sensor pad for controlling the deployment of self-inflating restraint provides a sensor pad that is weight sensitive and that detects the presence of a person of a selected weight sitting in seat associated with the sensor pad and that upon detection of a person of a selected weight occupying the seat directs the airbag to deploy in the event of a collision without significantly increasing the vehicle weight of cost of manufacture.

## Claims

1. A weight sensing pad (10) for controlling activation of an automobile airbag, said weight sensing pad (10) comprising:
a bladder member (15) having an interior volume defined by first and second sheets (34, 38) perimetrically bonded together, and a fluid contained within said interior volume of said bladder member (15)
**characterized in that** said interior volume of said bladder member (15) is subdivided into a plurality of cells (42; 42'; 42") in fluid communication with each other by a plurality of small, substantially circular regions of bonding between said first and second sheets (34; 38).

2. The weight sensing pad (10) of claim 1 wherein said plurality of cells (42; 42'; 42") are uniformly shaped.

3. The weight sensing pad (10) of claim 1 or 2 wherein said plurality of small, substantially circular regions of bonding are randomly spaced.

4. The weight sensing pad (10) of one of the foregoing claims wherein said regions of bonding are defined by spot welds (46).

5. The weight sensing pad (10) of one of the foregoing claims wherein said fluid is non-compressible and has a low freezing point.

6. The weight sensing pad (10) of one of the foregoing claims wherein said fluid is silicon or silica gel.

7. The weight sensing pad (10) of one of the foregoing claims wherein said weight sensing pad (10) further comprises a pressure activated electronic transducer (26) in fluid communication with said bladder member (15) and in electronic communication with an airbag control module, wherein said transducer (26) is activated by a selected volumetric displacement of said fluid that provides a pressure change in said bladder member (15); and a pressure tube (22) interconnected between and in fluid communication with said bladder member (15) and said transducer (26).

8. The weight sensing pad (10) of one of the foregoing claims wherein said weight sensing pad (10) further comprises at least one securement region for facilitating securement of said weight sensing pad (10) to an automobile seat (54).

9. The weight sensing pad (10) of one of the foregoing claims wherein said weight sensing pad (10) further comprises at least one support member (70) for engaging a seat frame, said support member (70) being defined by a plannar support panel and having members for engaging a seat frame wherein said bladder member (15) is secured to said member (70).

10. The weight sensing pad (10) of one of the foregoing claims wherein a bore (48) is provided in substantially each of said plurality of small, substantially circular regions of bonding.

11. The weight sensing pad (10) according to one of the foregoing claims,
wherein said bladder member is subdivided into a plurality of uniformly shaped cells in communication with each other by a plurality of small, substantially circular regions of bonding between first and second sheets; and
wherein said fluid is non-compressible and has a low freezing point.

12. The weight sensing pad (10) of one of the foregoing claims wherein said uniformly shaped cells are substantially triangularly shaped.

13. The weight sensing pad (10) of one of the foregoing claims wherein a bore (48) is provided in substantially each of said plurality of small, substantially circular regions of bonding for providing ventilation through said weight sensing pad (10).

14. The weight sensing pad (10) of one of the foregoing claims wherein said electronic transducer (26) is a digital transducer.

15. The weight sensing pad (10) of one of the foregoing claims wherein said uniformly shaped cells are hexagonal shaped.

## Patentansprüche

1. Gewichterfassungs-Polster (10) zum Steuern von Aktivierung eines Fahrzeug-Airbags, wobei das Gewichterfassungs-Polster (10) umfasst:
ein Balgelement (15), das ein Innenvolumen hat, das durch eine erste und eine zweite Bahn (34, 38) gebildet wird, die am Umfang miteinander verbunden sind, sowie ein Fluid, das in dem Innenvolumen des Balgelementes (15) enthalten ist,
**dadurch gekennzeichnet, dass** das Innenvolumen des Balgelementes (15) durch eine Vielzahl kleiner, im Wesentlichen kreisförmiger Bereiche von Verbindung zwischen der ersten und der zweiten Bahn (34; 38) in eine Vielzahl von Zellen (42; 42'; 42") unterteilt ist, die in Fluidverbindung miteinander stehen.

2. Gewichterfassungs-Polster (10) nach Anspruch 1, wobei die Vielzahl von Zellen (42; 42'; 42") einheitlich geformt sind.

3. Gewichterfassungs-Polster (10) nach Anspruch 1 oder 2, wobei die Vielzahl kleiner, im Wesentlichen gleichförmiger Bereiche von Verbindung willkürlich beabstandet sind.

4. Gewichterfassungs-Polster (10) nach einem der vorangehenden Ansprüche, wobei die Bereiche von Verbindung durch Punktverschweißung (46) gebildet werden.

5. Gewichterfassungs-Polster (10) nach einem der vorangehenden Ansprüche, wobei das Fluid nicht komprimierbar ist und einen niedrigen Gefrierpunkt hat.

6. Gewichterfassungs-Polster (10) nach einem der vorangehenden Ansprüche, wobei das Fluid Silikon oder Silicagel ist.

7. Gewichterfassungs-Polster (10) nach einem der vorangehenden Ansprüche, wobei das Gewichterfassungs-Polster (10) des Weiteren einen durch Druck aktivierten elektronischen Wandler (26) in Fluidverbindung mit dem Balgelement (15) und in elektronischer Verbindung mit eine Airbag-Steuermodul umfasst, wobei der Wandler (26) durch eine ausgewählte volumetrische Verdrängung des Fluids aktiviert wird, die eine Druckänderung in dem Balgelement (15) erzeugt, sowie eine Druckröhre (22), die Verbindung zwischen dem Balgelement (15) und dem Wandler (26) herstellt und in Fluidverbindung mit ihnen steht.

8. Gewichterfassungs-Polster (10) nach einem der vorangehenden Ansprüche, wobei das Gewichterfassungs-Polster (10) des Weiteren wenigstens einen Befestigungsbereich umfasst, der Befestigung des Gewichterfassungs-Polsters (10) an einem Kraftfahrzeugsitz (54) ermöglicht.

9. Gewichterfassungs-Polster (10) nach einem der vorangehenden Ansprüche, wobei das Gewichterfassungs-Polster (10) des Weiteren wenigstens ein Trageelement (70) umfasst, das mit einem Sitzrahmen in Eingriff kommt, das Trageelement (70) durch eine plane Trageplatte gebildet wird und Elemente hat, die mit einem Sitzrahmen in Eingriff kommen, und das Balgelement (15) an dem Element (70) befestigt ist.

10. Gewichterfassungs-Polster (10) nach einem der vorangehenden Ansprüche, wobei eine Bohrung (48) in im Wesentlichen jedem der Vielzahl kleiner, im Wesentlichen kreisförmiger Bereiche von Verbindung vorhanden ist.

11. Gewichterfassungs-Polster (10) nach einem der vorangehenden Ansprüche,
wobei das Balgelement durch eine Vielzahl kleiner, im Wesentlichen kreisförmiger Bereiche von Verbindung zwischen der ersten und der zweiten Bahn in eine Vielzahl einheitlich geformter Zellen unterteilt ist, die in Verbindung miteinander stehen; und
wobei das Fluid nicht komprimierbar ist und einen niedrigen Gefrierpunkt hat.

12. Gewichterfassungs-Polster (10) nach einem der vorangehenden Ansprüche, wobei die einheitlich geformten Zellen im Wesentlichen dreieckig geformt sind.

13. Gewichterfassungs-Polster (10) nach einem der vorangehenden Ansprüche, wobei einen Bohrung (48) in im Wesentlichen jedem der Vielzahl kleiner, im Wesentlichen kreisförmiger Bereiche von Verbindung vorhanden ist, um Belüftung durch das Gewichterfassungs-Polster (10) hindurch zu bewirken.

14. Gewichterfassungs-Polster (10) nach einem der vorangehenden Ansprüche, wobei der elektronische Wandler (26) ein digitaler Wandler ist.

15. Gewichterfassungs-Polster (10) nach einem der vorangehenden Ansprüche, wobei die einheitlich geformten Zellen sechseckig geformt sind.

## Revendications

1. Coussin détecteur de poids (10) servant à commander le déclenchement d'un airbag, ledit coussin détecteur de poids (10) comprenant :
un élément à vessie (15) ayant un volume intérieur défini par des première et deuxième feuilles (34 ; 38) liées l'une à l'autre au niveau de leur périmètre, et un fluide inclus dans ledit volume intérieur dudit élément à vessie (15)
**caractérisé en ce que** ledit volume intérieur dudit élément à vessie (15) est subdivisé en une pluralité de cellules (42 ; 42' ; 42") en communication fluidique l'une avec l'autre par une pluralité de petites régions sensiblement circulaires de liaison entre lesdites première et deuxième feuilles (34 ; 38).

2. Coussin détecteur de poids (10) selon la revendication 1, dans lequel ladite pluralité de cellules (42 ; 42' ; 42") sont façonnées uniformément.

3. Coussin détecteur de poids (10) selon la revendication 1 ou 2, dans lequel ladite pluralité de petites régions de liaison sensiblement circulaires sont espacées au hasard.

4. Coussin détecteur de poids (10) selon l'une quelconque des revendications précédentes, dans lequel lesdites régions de liaison sont définies par des soudures par points (46).

5. Coussin détecteur de poids (10) selon l'une quelconque des revendications précédentes, dans lequel ledit fluide est non compressible et présente un point de congélation bas.

6. Coussin détecteur de poids (10) selon l'une quelconque des revendications précédentes, dans lequel ledit fluide est du gel de silicone ou de silice.

7. Coussin détecteur de poids (10) selon l'une quelconque des revendications précédentes, dans lequel ledit coussin détecteur de poids (10) comprend en outre un transducteur électronique activé par pression (26) en communication fluidique avec ledit élément à vessie (15) et en communication électronique avec un module de commande d'airbag, dans lequel ledit transducteur (26) est activé par un volume déplacé sélectionné dudit fluide qui fournit un changement de pression dans ledit élément à vessie (15) ; et une conduite de pression (22) interconnectée entre et en communication fluidique avec ledit élément à vessie (15) et ledit transducteur (26).

8. Coussin détecteur de poids (10) selon l'une quelconque des revendications précédentes, dans lequel ledit coussin détecteur de poids (10) comprend en outre au moins une zone de fixation servant à faciliter la fixation dudit coussin détecteur de poids (10) à un siège de véhicule (54).

9. Coussin détecteur de poids (10) selon l'une quelconque des revendications précédentes, dans lequel ledit capteur de mesure en forme de coussinet (10) comprend en outre au moins un élément de support (70) servant à engager une armature de siège, ledit élément de support (70) étant défini par un panneau de support plan et présentant des éléments servant à engager une armature de siège, dans lequel ledit élément à vessie (15) est fixé audit élément (70).

10. Coussin détecteur de poids (10) selon l'une quelconque des revendications précédentes, dans lequel un trou (48) est prévu dans essentiellement chacune de ladite pluralité de petites régions de liaison sensiblement circulaires.

11. Coussin détecteur de poids (10) selon l'une quelconque des revendications précédentes,
dans lequel ledit élément à vessie est subdivisé en une pluralité de cellules façonnées uniformément et qui sont en communication fluidique l'une avec l'autre par une pluralité de petites régions sensiblement circulaires de liaison entre des première et deuxième feuilles ; et
dans lequel ledit fluide est non compressible et présente un point de congélation bas.

12. Coussin détecteur de poids (10) selon l'une quelconque des revendications précédentes, dans lequel lesdites cellules façonnées uniformément présentent une forme sensiblement triangulaire.

13. Coussin détecteur de poids (10) selon l'une quelconque des revendications précédentes, dans lequel un trou (48) est prévu dans essentiellement chacune de ladite pluralité de petites régions de liaison sensiblement circulaires pour fournir une ventilation à travers ledit capteur de mesure en forme de coussinet (10).

14. Coussin détecteur de poids (10) selon l'une quelconque des revendications précédentes, dans lequel ledit transducteur électronique (26) est un transducteur numérique.

15. Coussin détecteur de poids (10) selon l'une quelconque des revendications précédentes, dans lequel lesdites cellules façonnées uniformément présentent une forme hexagonale.
